# EUROPEAN PATENT APPLICATION

(11) **EP 3 904 571 A1**
(43) Date of publication of application: **03.11.2021**
(21) Application number: 19902804.4
(22) Date of filing: 27.12.2019
(51) Int. Cl.: D01F 8/02, D01F 8/04, D01F 8/14, D01F 1/00, D01D 13/02, D01D 5/12

(54) **POLYMERIC SYNTHETIC FIBRES DOPED WITH LIGNIN, METHOD FOR OBTAINING SAME AND USE FOR MAKING TEXTILE PRODUCTS**

(30) Priority: 28.12.2018 BR 102018077446
(71) Applicant: Suzano S.A., 41810-012 Salvador - BA (BR)
(72) Inventor: TORREZAN, Talyta, 13607-182 Araras - SP (BR); ROCHA, Rafael Bastos, 21750-001 Rio de Janeiro - RJ (BR); ALBINO, Nathan Riany Valerio, 20560-080 Rio de Janeiro - RJ (BR)
(74) Representative: Aera A/S
(86) International application number: PCT/BR2019/050572
(87) International publication number: WO 2020/132739

(57) **Abstract**

Applied in the field of manufacturing textile products, the present invention provides compositions of synthetic polymeric fibers containing from 0.25% to 4.00% of lignin originated from the *Kraft process,* which are incorporated into the polymer through a subsequent extrusion process with the spinning process, by the use of a double-screw extruder coupled to a spinnerette. The obtained fibers are used in the production of textile products with anti-UV properties due to the presence of lignin, and with greater tenacity, resistance to bursting and antioxidant activity of the knit.

## Description

### Field of the invention:

The present invention is inserted, in general, in the field of fabrication of textile products, more specifically aimed to the application of lignin as an additive in polymeric materials for weaving, with the main purpose of promoting the anti-UV effect, as well as improving the mechanical properties of fibers and fabrics, and other correlated effects, such as the antioxidant activity of fibers and fabrics. Said fibers are produced in a continuous extrusion process followed by spinning, in which lignin is incorporated.

### Background of the invention:

The market for developing clothes with anti-UV protection has expanded over the last 20 years due to the growing concern with skin exposure to the sun related to possible damage, such as premature aging or even cancer in more severe conditions.

At the beginning of the century, the vast majority of clothing items with UV protection had problems related to weight and dyeing, as they were produced in dark tones, and needed to be denser to keep their minimum mechanical properties.

Nowadays, due to technological advances in the field, it has become possible to produce products with a variety of colors and lightness, also providing the ease of production of fabrics with different designs.

One of the commonly used additives is titanium dioxide (TiO₂), usually in the proportion of 1.5% by mass in polyester (PET), however, post production problems are common, such as photo-yellowing of the fabrics and photodegradation of the fibers.

However, there are still several deficiencies inherent to the processing to include these types of additives in polymeric materials and subsequent spinning for textile products in general, as some additives, such as lignin, are highly susceptible to degradation, and the high shear rates of the process can incite these degrading mechanisms.

The raw material lignin has been increasingly studied to act as an anti-UV agent in some chemical formulations. However, its application as an additive in thermoplastic polymer extrusion still faces technical difficulties, due to its high possibility of degradation at relatively low temperatures: 200°C to 220°C.

In the case of spinning for the formation of synthetic fibers used in the manufacture of textile products, such as knits, flat fabrics, and canvas, the filaments are commonly extruded (spinning) from pellets previously extruded with a certain content of additives. This content of additives is at most 4% by mass, as the usual process is highly sensitive to heterogeneity.

The main problem that restricts the use of lignin as additives in polymeric materials for the production of anti-UV fabrics is its high susceptibility to degradation, when subjected to several consecutive thermomechanical steps such as: heating, cooling, shearing, among others.

That is, conventional extrusion processes in which additivaded pellets are produced for subsequent spinning generally present problems related to lignin degradation, which result in losses of expected properties, and prevent the consolidation of the spinning process.

With regard to the weaving process, it is possible to divide the obtained products into three classes: Nonwovens, flat fabrics and knits. Nonwovens are flat, flexible and porous structures, which, however, require mechanical (friction) and/or chemical (adhesion) and/or thermal (cohesion) processes.

The flat fabric is formed by a structure produced by the interweaving of a set of warp threads, arranged in the longitudinal direction (length) of the fabric and another set of weft threads, arranged in the transverse direction (width) of the fabric, forming an angle of (or close to) 90°. The weave stitches are rigid, not allowing the threads to move over each other when the fabric is tensioned.

On the other hand, the mesh is not formed by the weft and warp principle, but by the interweaving of a thread (or cable) with itself, with each loop passing through the inside of the previous loop, without having a fixed point of connection between them. In this case, they take on sinusoidal shapes that support each other and are free to move when subjected to tension, characterizing their flexibility. That is, for the production of polymeric meshes it is necessary that the used fibers can promote significant tenacity and resistance to bursting.

### State of the art:

Some prior art documents describe products and processes that use lignin as additives in polymeric materials and/or promote some solution to try to prevent the degradation of such additives in the processing for fiber formation.

Patent WO2008140337 addresses the production of textiles using cellulose fibers containing nano-lignins, which act in the protection against UV radiation. The process consists of using a dispersion of lignin to promote the finishing of textiles, in which a technique of covering fabrics through immersion is used, not referring, therefore, to an incorporation of lignin directly into the fiber.

In addition, it is noteworthy that the fibers used in the aforementioned patent application are cellulose fibers that naturally contain lignin in its composition, while in the present invention, lignin is used as an additive, completely isolated and more reactive, obtained by the *kraft* process, from eucalyptus, which allows greater interaction with other compounds, presenting more suitable behavior and properties for acting as an additive in polymeric materials.

Document US5236645 covers a process in which an additive is incorporated into the already molten polymer using an aqueous solution of the dispersed additive, followed by volatilization of the aqueous phase, concentration and spinning of the mixture.

In said document it was identified that a dispersion of various additives is carried out by means of some agents that facilitate the incorporation into the polymer. Furthermore, it is not mentioned the use of lignin, which is a natural additive, susceptible to degradation and difficult to incorporate in this type of process.

Still, it was understood, from the description of document US5236645, that the spinning step is only performed after obtaining a concentrate (after total volatilization) which is then pelletized and, subsequently, spun. That is, there is no continuous extrusion process followed by spinning.

Document CN102776601 addresses a concomitant extrusion and spinning process for incorporating additives into polymers, using a double-screw extruder and spinning.

Despite presenting a similar proposition regarding the process, it is understood that the process parameters are completely different, as the process parameters presented would not apply to the use of lignin. To arrive at the process of the present invention, the temperature and parameters in the spinning zones and parts of the spinneret had to be specifically studied to avoid lignin degradation, as well as the stretching parameters relating to temperature and rotation.

### Brief description of the invention:

Applied in the field of manufacturing textile products, the present invention reveals compositions of polymeric synthetic fibers containing from 0.25% to 4.00% of lignin from the *Kraft process,* from eucalyptus, which are incorporated into the polymer through a subsequent extrusion process with the spinning process, by the use of a double-screw extruder coupled to a spinnerette, containing five heating zones. The obtained fibers are used in the production of textile products with anti-UV properties due to the presence of lignin, and with greater tenacity, resistance to bursting and antioxidant activity.

### Brief description of the drawings:

In order to aid the identification of the main characteristics of these compositions and process, the figures are presented, to which references are made as follows:

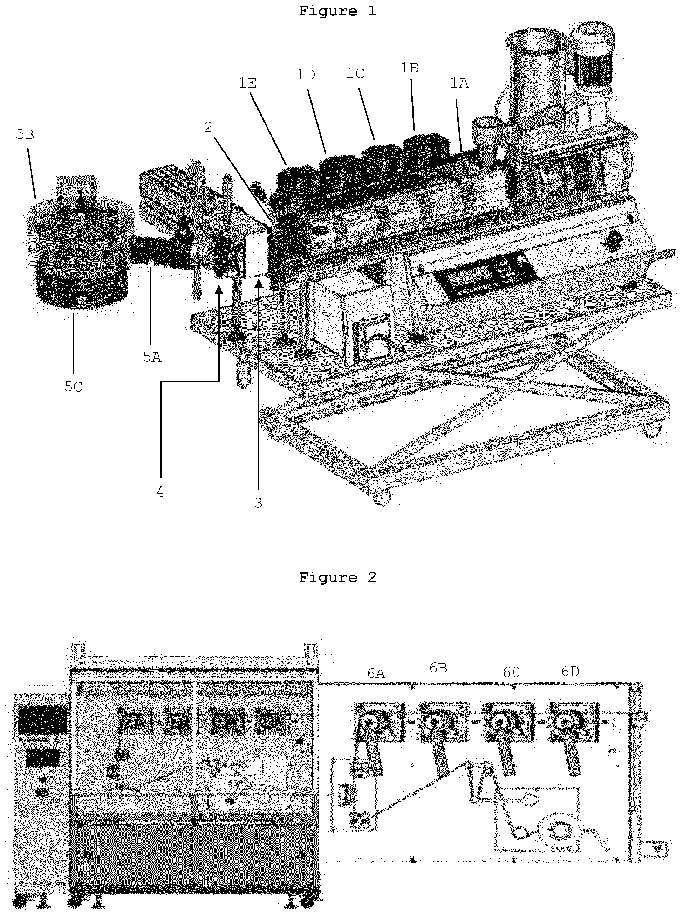

Figure 1 shows the spinnerette attached to the extruder, with details for the flow of the additivated polymeric material. The double-screw extruder (1) is divided into five gradual heating zones (1A) (1B) (1C) (1D) (1E) and, by means of an adapter (2), the connection between the extruder and the spinnerette is made; the material leaving the extruder passes through a pump (3) which directs the flow to the clamp (4) and subsequently to the first spinning matrix (5A). The spinning process continues through the second matrix (5B) and finally ends up at the third matrix (5C).
Figure 2 shows the spinnerette coupled to the extruder with details for the heating rollers for continuous spinning, usually called *godets,* at increasing intervals of rotation (6A) (6B) (6D) (6E), in order to promote stretching of the wires.

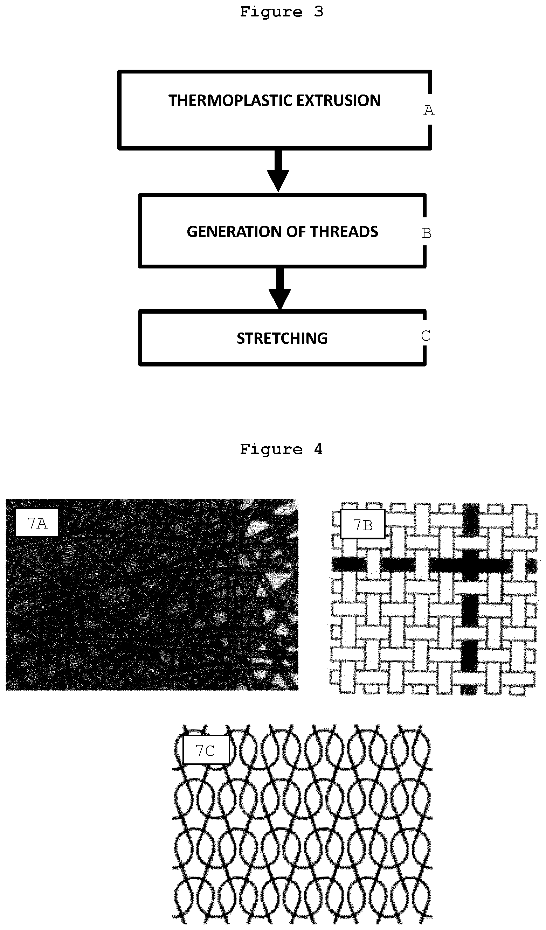

Figure 3 shows a brief flowchart of the main steps in the processing of polymeric yarns, starting with: thermoplastic extrusion (A) of the polymeric material together with the lignin additive; wire generation (B) according to specific parameters; stretching on the apinnerette (C).
Figure 4 shows the three types of fabrics that can be produced with the polymeric synthetic fibers object of this invention, characterizing their use for the production of "non-woven" structures (7A), flat fabrics (7B) and knits (7C).

### Detailed description of the invention:

The present invention covers polymeric compositions, containing lignin from the *Kraft process,* from eucalyptus, according to the following contents in relation to the used polymeric materials:

| **Polymer** | **Range** | **Preferred Value** |
|---|---|---|
| Polypropylene (PP) | 0.25% - 4.00% | 1.00 % |
| Poly(ethylene terephthalate) (PET) | 0.25% - 4.00% | 0.50% |
| Polyethylene (PE) | 0.25% - 4.00% | 1.00 % |
| Poly(butylene terephthalate) (PBT) | 0.25% - 4.00% | 1.00 % |
| Poly(lactic acid) (PLA) | 0.25% - 4.00% | 2.00% |

Polymeric material is considered to be any thermoplastic polymer with rheological characteristics that make it suitable for spinning, such as, for example, Polypropylene (PP), Polyethylene terephthalate (PET), Polyethylene (PE), Polybutylene terephthalate (PBT), Poly lactic acid (PLA), Polyamide (PA), but not limited to these.

PET and PP are the most used polymers in the spinning of synthetic textile fibers, PLA is an environmentally sustainable option, PE has high compatibility with lignin in terms of process temperature, as well as PP, and PBT has great chemical affinity with lignin, in addition to having consolidated use in specific applications in the textile industry.

The lignin used in this invention is isolated from eucalyptus biomass by means of the *kraft process.* It is noteworthy that although plant biomass is mainly composed of cellulose, hemicellulose and lignin, the processes to isolate lignin from lignocellulosic biomass generate structural alterations and splits in the lignin chain of origin. Thus, the isolated lignin does not have the same characteristics and effects in the application of lignin contained in biomass.

The use of lignin promoted technical benefits to such synthetic textile fibers, as well as implications related to the environmental advantages of being a product from a renewable and economical source.

The studies carried out showed improvements in the mechanical resistance to traction, tenacity and elongation of the threads, as well as an increase in the protection factor against ultraviolet rays and in the oxidative induction time (OIT), which improves the antioxidant activity. This improvement in the antioxidant activity results in the delay of the thermooxidative degradation of said fibers. Such protective effects are also verified in the knit produced by synthetic fibers, as well as the increase in resistance to bursting.

The results shown in the table below, obtained through fiber traction tests, demonstrated that the addition of lignin positively influences the mechanical properties of some of the aforementioned polymers, demonstrating an increase in tenacity related to the addition of lignin:

| **Base polymer** | **Addition of Lignin** | **Tenacity (cN/tex)** |
|---|---|---|
| Polypropylene (PP) | 0% | 13.8 |
| | 1.0% | 14.3 |
| Poly(ethylene terephthalate) (PET) | 0% | 12.07 |
| | 0.5% | 15.32 |
| Poly(butylene terephthalate) (PBT) | 0% | 11.08 |
| | 2.0% | 13.96 |

The developed production process is characterized by being a continuous process that promotes the incorporation of lignin into the polymeric material, through the extrusion process, carried out in a double-screw extruder coupled to a spinning matrix, so that the following steps are promoted in continuous flow: thermoplastic extrusion (A), generation of threads (B) and strecthing (C).

The used spinnerette has 144 capillaries being the capillary length 0.3 mm and the capillary diameter 0.17 mm. The melt pressure can vaary from 60-100 bar, while the pump rotation varies from 15 to 35 rpm.

The four stretching godets (rollers) have a gradual increase in rotation, the first being between 50 and 90 rpm, the second between 80 and 130 rpm, the third between 120 and 190 rpm and the fourth between 280 and 390 rpm.

Incorporation was carried out in the various polymers, balancing only the process parameters, mainly in drastic cases of thermo-mechanical requests for lignin, such as in the cases of PET and PBT. The ranges of the main temperature parameters used in the spinning and stretching of the aforementioned process are gathered in the table below:

| **Extrusion and spinning/stretching temperatures (°C)** | |
|---|---|
| Zone 1 | 50 - 170 |
| Zone 2 | 170 - 250 |
| Zone 3 | 170 - 250 |
| Zone 4 | 170 - 270 |
| Zone 5 | 170 - 270 |
| Adaptor | 200 - 280 |
| Pump | 200 - 280 |
| Clamp | 200 - 280 |
| Matrix 1 | 150 - 300 |
| Matrix 2 | 150 - 300 |
| Matrix 3 | 150 - 300 |
| *Godets* | 50 - 120 |
| Total stretching | 2.5 - 7.5 |

It is important to emphasize the possibility of reusing fabrics after they are aged, through a recycling process, as lignin is already incorporated and, in this case, there is no need to go through the incorporation process again, configuring itself as an advantage both economic and environmental.

### Example of the invention: Polypropylene (PP) + Lignin

An example of incorporation of 1% lignin in Polypropylene (PP), carried out by means of the aforementioned continuous process of extrusion and spinning, will be discussed, in order to demonstrate the improvement of anti-UV effects according to the results obtained by the sun protection factor test.

The sun protection factor test was carried out in accordance with the Australian standard AS:NZS 4399:1996 and, for this test, RIB meshes were chosen, which are widely used in the production of collars and cuffs in the textile industry because they have a more aggregated interlacing.

The samples were produced using 2 cables according to the specification of pure fabric, composite or mixed:
AM1 - Pure polypropylene (2 cables)
AM2 - Mixed Mesh - pure PP (1 cable) / PP 1% lignin (1 cable)
AM3 - Polypropylene with 1% lignin (2 cables)

The results were evaluated according to a classification basis based on the aforementioned Australian standard that categorizes UPF (Ultraviolet Protection Factor) values, wherein the samples AM2 and AM3 (containing lignin) showed an ultraviolet protection factor equal to or greater than 50, featuring an excellent protection against UV rays, according to the table below:

| **Reference** | **Note** | **Factor** | **Category** |
|---|---|---|---|
| AM1 | PP Pure | 0 | No Protection |
| AM2 | Mixed mesh | 50 | Excellent protection |
| AM3 | PP + 1% Lignin | 50+ | Excellent protection |

In other words, it was found that the addition of 1% lignin through said process was an essential condition to obtaining the anti-UV effect in the spinning and consequent production of Polypropylene (PP) fabrics.

In addition, knit busting tests were performed, according to standard ISO13938-1:1999, in order to identify the effect of the addition of lignin on the mechanical properties of the textile artifact. The table below shows the results of bursting resistance, in MPa:

| **Reference** | **Note** | **Bursting Resistance (MPa)** |
|---|---|---|
| AMA | PP Pure | 1.26 |
| AMB | Mixed mesh | 1.84 |
| AMC | PP + 1% Lignin | 2.67 |

The obtained results showed that the breaking strength for the mesh produced exclusively with PP addivated with lignin (AMC) was 2.12 times greater than the sample of PP without additives. This equates to a 112% increase in bursting strength, while the AMB (Mixed Mesh) sample achieved a 46% increase in bursting strength.

Furthermore, Oxidative Induction Time (OIT) tests were performed to assess the level of thermal stability and oxidative resistance of the polymeric material in samples of approximately 5 mg inserted in aluminum crucibles.

The OIT test is performed using differential scanning calorimetry (DSC) in DSC Shimadzu equipment, model DSC-60, in order to predict the thermoxidative performance of a given material, that is, to assess the thermal stability in oxidant atmosphere of the material of interest.

Therefore, the OIT test consists of determining the time in which the material will undergo oxidation, at a given temperature, when subjected to an oxidant atmosphere (presence of O₂).

The calculated OIT is the time measured between the moment of introduction of oxygen gas (O₂) in the DSC oven and the Onset temperature, obtained from the exothermic oxidation peak. The table below exemplifies how the determination of the OIT of heat flux as a function of time is carried out.

| **Sample** | **Step** | **Temperat ure Range (°C)** | **Heating or cooling rate (°C/min)** | **Used gas** | **Gas Flow (ml/min)** |
|---|---|---|---|---|---|
| AM1 | Heating | 25 - 200 | 20 | N₂ | 50 |
| AM2 | Isotherm | 200 | 5 mins | N₂ | 50 |
| AM3 | Isotherm | 200 | - | O₂ | 50 |

The following table presents the Oxidative Induction Time (OIT) results for samples AM1, AM2 and AM3, in minutes:

| **Reference** | **Note** | **OIT (min)** |
|---|---|---|
| AM1 | PP Pure | 0 |
| AM2 | Mixed mesh | 6 |
| AM3 | PP + 1% Lignin | 14 |

The obtained results showed that the oxidative induction time (OIT) for the mesh produced exclusively with PP additivated with lignin (AM3) was 14 minutes, while the PP sample without additives (AM1) had an OIT of 0 minutes and the sample AM2 (mixed mesh) had an OIT of 6 minutes. The OIT for the mesh produced exclusively with PP additivated with 1% lignin (AM3) was 2.33 times higher than the mixed mesh sample (AM2), which is equivalent to a 133% increase in the oxidative induction time (OIT).

### Example of the invention: Polyethylene terephthalate (PET) + Lignin

An example of incorporation of 0.50% of lignin in Polyethylene terephthalate (PET), carried out by means of the aforementioned continuous process of extrusion and spinning, will be discussed, in order to demonstrate the improvement of the anti-UV effects according to results obtained by the sun protection factor test.

The sun protection factor test was carried out in accordance with the Australian standard AS:NZS 4399:1996 and, for this test, RIB meshes were chosen, which are widely used in the production of collars and cuffs in the textile industry because they have a more aggregated interlacing.

The samples were produced using 2 cables according to the specification of pure fabric, composite or mixed:
AN1 - Pure polyethylene terephthalate (2 cables)
AN2 - Mixed Mesh - Pure PET (1 cable) / PET 0.5% lignin (1 cable)
AN3 - Polyethylene terephthalate with 0.5% lignin (2 cables)

The results were evaluated according to a classification basis based on the aforementioned Australian standard that categorizes UPF (Ultraviolet Protection Factor) values, wherein the samples AN2 and AN3 (containing lignin) showed an ultraviolet protection factor greater than 50, featuring an excellent protection against UV rays, according to the table below:

| **Reference** | **Note** | **Factor** | **Category** |
|---|---|---|---|
| AN1 | Pure PET | 30 | Very good protection |
| AN2 | Mixed mesh | 50+ | Excellent protection |
| AN3 | PET + 0.5% Lignin | 50+ | Excellent protection |

In other words, it was found that the addition of 0.5% lignin through said process was an essential condition to obtain an increase in the anti-UV effect in the spinning and consequent production of Polyethylene terephthalate (PET) fabrics.

In addition, knit busting tests were performed, according to standard ISO13938-1:1999, in order to identify the effect of the addition of lignin on the mechanical properties of the textile artifact. The table below shows the results of bursting resistance, in MPa:

| **Reference** | **Note** | **Bursting Resistance (MPa)** |
|---|---|---|
| ANA | Pure PET | 1.02 |
| ANB | Mixed mesh | 1.27 |
| ANC | PET + 0.5% Lignin | 1.16 |

The obtained results showed that the breaking resistance for the mesh produced exclusively with PET additivated with lignin (ANC) was 1.14 times greater than that of a PET sample without additives. This is equivalent to a 14% increase in bursting resistance, while in the ANB (Mixed Mesh) sample, a 25% increase in the bursting resistance was achieved.

Furthermore, Oxidative Induction Time (OIT) tests were performed to assess the level of thermal stability and oxidative resistance of the polymeric material in samples of approximately 5 mg inserted in aluminum crucibles.

The OIT test is performed using differential scanning calorimetry (DSC) in DSC Shimadzu equipment, model DSC-60, in order to predict the thermoxidative performance of a given material, that is, to assess the thermal stability in oxidant atmosphere of the material of interest.

Therefore, the OIT test consists of determining the time in which the material will undergo oxidation, at a given temperature, when subjected to an oxidant atmosphere (presence of O₂).

The calculated OIT is the time measured between the moment of introduction of oxygen gas (O₂) in the DSC oven and the Onset temperature, obtained from the exothermic oxidation peak. The table below exemplifies how the determination of the OIT of heat flux as a function of time is carried out.

| **Sample** | **Step** | **Temperat ure Range (°C)** | **Heating or cooling rate (°C/min)** | **Used gas** | **Gas Flow (ml/min)** |
|---|---|---|---|---|---|
| AN1 | Heating | 25 - 280 | 20 | N₂ | 50 |
| AN2 | Isotherm | 280 | 5 mins | N₂ | 50 |
| AN3 | Isotherm | 280 | - | O₂ | 50 |

The following table presents the Oxidative Induction Time (OIT) results for samples AN1, AN2 and AN3, in minutes:

| **Reference** | **Note** | **OIT (min)** |
|---|---|---|
| AN1 | Pure PET | 0 |
| AN2 | Mixed mesh | 9 |
| AN3 | PET + 0.5% Lignin | 17 |

The obtained results showed that the oxidative induction time (OIT) for the mesh produced exclusively with PET additivated with lignin (AN3) was 17 minutes, while the PET sample without additives (AN1) had an OIT of 0 minutes and the sample AN2 (mixed mesh) showed an OIT of 9 minutes. The OIT for the mesh produced exclusively with PET additivated with 0.5% lignin (AN3) was approximately 1.89 times higher than the mixed mesh sample (AN2), which is equivalent to an increase of almost 89% in the oxidative induction time (OIT).

## Claims

1. Synthetic polymeric fibers additivated with lignin comprising from 0.25% to 4.00% of lignin as an additive incorporated into thermoplastic polymeric materials.

2. Synthetic polymeric fibers additivated with lignin according to claim 1, wherein the thermoplastic polymeric materials are preferably polypropylene (PP), Poly (ethylene terephthalate) (PET), Polyethylene (PE), Poly (butylene terephthalate) (PBT), Poly (lactic acid) (PLA).

3. Synthetic polymeric fibers additivated with lignin according to claim 1, wherein the lignin is obtained from eucalyptus, by the *Kraft process.*

4. Synthetic polymeric fibers additivated with lignin according to claim 1, preferably containing 1.00% of lignin when produced from the polymers Polypropylene (PP), Polyethylene (PE), Poly (butylene terephthalate) (PBT).

5. Synthetic polymeric fibers additivated with lignin according to claim 1, preferably containing 0.50% of lignin when produced from the polymer Poly (ethylene terephthalate) (PET).

6. Synthetic polymeric fibers additivated with lignin according to claim 1, preferably containing 2.00% of lignin when produced from the polymer Poly (lactic acid) (PLA).

7. Synthetic polymeric fibers additivated with lignin according to any one of claims 1 to 6, presenting anti-UV protection.

8. Synthetic polymeric fibers additivated with lignin according to any one of claims 1 to 6, presenting mechanical resistance to traction, tenacity and elongation of the threads.

9. Synthetic polymeric fibers additivated with lignin according to any one of claims 1 to 6, presenting bursting resistance.

10. Synthetic polymeric fibers additivated with lignin according to any one of claims 1 to 6, presenting antioxidant activity.

11. Process for obtaining synthetic polymeric fibers additivated with lignin being carried out in a single equipment that integrates a double-screw extruder and a spinnerette and is embodied through the following main steps:
(A) thermoplastic extrusion with double-screw extruder;
(B) generation of threads (spinning);
(C) stretching of threads.

12. Process for obtaining synthetic polymeric fibers additivated with lignin according to claim 11, promoting zones of gradual heating in step (1), according to temperature ranges varying between 50 and 300°C.

13. Process for obtaining synthetic polymeric fibers additivated with lignin according to claim 11, promoting the passage of the extruded product to the spinnerette coupled by means of an adapter (2) using a pump (3) interconnected to a clamp (4).

14. Process for obtaining synthetic polymeric fibers additivated with lignin according to claim 11, performing the spinning (5) through the subsequent passage in matrixes, under a controlled temperature range located within the range from 150°C to 300°C.

15. Process for obtaining synthetic polymeric fibers additivated with lignin according to claim 11, performing the stretching (6) of synthetic fibers using heating rollers for continuous spinning *(godets)* with rotation levels gradually increasing.

16. Use of synthetic polymeric fibers additivated with lignin, being employed for manufacturing textile products.

17. Use of synthetic polymeric fibers additivated with lignin according to claim 16, being employed in the production of anti-UV fabrics with a sun protection factor (SPF) equal to or greater than 15.

18. Use of synthetic polymeric fibers additivated with lignin according to claim 16, being employed in the production of fabrics with mechanical resistance to traction, tenacity and elongation of the threads.

19. Use of synthetic polymeric fibers additivated with lignin according to claim 16, being employed in the production of fabrics with resistance to bursting with a tenacity value equal to or greater than 13.9 (cN/tex).

20. Use of synthetic polymeric fibers additivated with lignin according to claim 16, being employed in the production of fabrics with antioxidant activity with oxidative induction time (OIT) equal to or greater than 6 minutes.
